**Europäisches Patentamt**

**European Patent Office**

**Office européen des brevets**

(19)

(11) Veröffentlichungsnummer : **0 402 376 B1**

(12) **EUROPÄISCHE PATENTSCHRIFT**

(45) Veröffentlichungstag der Patentschrift :
**12.05.93 Patentblatt 93/19**

(21) Anmeldenummer : **89902630.6**

(22) Anmeldetag : **24.02.89**

(86) Internationale Anmeldenummer :
**PCT/DE89/00108**

(87) Internationale Veröffentlichungsnummer :
**WO 89/08267 08.09.89 Gazette 89/21**

(51) Int. Cl.⁵ : **G01T 1/04, G01T 3/00**

(54) **ANORDNUNG ZUR ERFASSUNG DER INTEGRALEN ÖRTLICHEN DOSIS UMGEBENDER ENERGIEREICHER STRAHLUNG.**

(30) Priorität : **03.03.88 DE 3806867**

(43) Veröffentlichungstag der Anmeldung :
**19.12.90 Patentblatt 90/51**

(45) Bekanntmachung des Hinweises auf die
Patenterteilung :
**12.05.93 Patentblatt 93/19**

(84) Benannte Vertragsstaaten :
**AT BE CH DE FR GB IT LI NL SE**

(56) Entgegenhaltungen :
**Applied Radiation and Isotopes, vol. 37, no. 6,
1986, Pergamon Journals Ltd. (Oxford, GB), T.
Kojima et al: "Alanine dosimeters using polymers as binders", pages 517-520
IEEE Transactions on Nuclear Science, vol.
NS-23, no. 6, December 1976 (New York, US),
W.L. Chadsey et al: "Radiation-induced signals in cables", pages 1933-1941**

(73) Patentinhaber : **kabelmetal electro GmbH
Kabelkamp 20 Postfach 260
W-3000 Hannover 1 (DE)**

(72) Erfinder : **HANISCH, Ferdinand
Gorch-Fock-Weg 40
W-3006 Burgwedel 1 (DE)**
Erfinder : **SCHLEESE, Eckard
Wilhelm-Busch-Strasse 2 a
W-3060 Stadthagen (DE)**

(74) Vertreter : **Mende, Eberhard, Dipl.-Ing.
kabelmetal electro GmbH Kabelkamp 20
Postfach 260
W-3000 Hannover 1 (DE)**

## Beschreibung

Die vorliegende Erfindung befaßt sich mit einer Anordnung zur Erfassung der integralen örtlichen Dosis umgebender energiereicher Strahlung.

Die zunehmende industrielle Verwendung energiereicher Strahlen in den unterschiedlichsten Bereichen der Technik, sowie auch das unerwünschte Auftreten solcher Strahlung, z.B. bei Hochenergie-Teilchenbeschleunigern, haben schon lange Anlaß zu Überlegungen gegeben, geeignete Meßeinrichtungen zu entwickeln. Dabei kommt es vor allem darauf an, die Strahlendosis zu ermitteln, die ein Körper aufgenommen hat, um so Schlußfolgerungen auf mögliche Schäden infolge der Strahlenbelastung oder auch nur auf Qualitätseinbußen an bestimmten Produkten ziehen zu können.

In diesem Zusammenhang hat man bereits festgestellt ("Radiation Protection Dosimetry" Vol. 9 Nr.4 PP 227281 (1984) nuklear technology publishing), daß eine Meßtechnik praktikabel ist, die auf den paramagnetischen Eigenschaften der Aminosäure Alanin beruht. Es hat sich nämlich gezeigt, daß im Alanin unter dem Einfluß energiereicher Strahlen langlebige freie Radikalstellen gebildet werden, die ein Maß für die jeweilige örtliche Strahlendosis darstellen.

Zur Verarbeitung des Alanins hat man auch bereits verschiedene Polymere untersucht, die als Bindemittel für diesen Werkstoff geeignet erscheinen (Applied Radiation and Isotopes, Bd 37, No. 6, 1986, S. 517-520, "Alanine dosimeters using polymers as binders"). Dabei wurde vorgeschlagen, das Alanin mit dem Polymeren zu mischen und warm auszuformen, entweder in Form von Platten geringer Abmessungen oder als Formstrang, aus dem die als Dosimeter wirkenden Abschnitte (rods) durch Zerschneiden hergestellt werden. Die mit diesen Proben durchgeführten Versuche machen zwar deutlich, welche Polymere mehr oder weniger zur Aufnahme des Alanins geeignet sind, sie lassen jedoch nicht die Handhabung der erprobten Materialien in der Praxis erkennen. So sind bis heute vergleichsweise preiswerte Vorrichtungen oder Anordnungen zur dosimetrischen Erfassung der Strhalenbelastung noch nicht bekannt geworden, so daß noch immer häufig, beispielsweise in auf energiereiche Strahlung angewiesenen Fertigungsbetrieben oder Forschungsanlagen, Unklarheiten über die von der Umgebung aufgenommenen Strahlendosen an ganz bestimmten Stellen bzw. Volumenelementen bestehen und damit auch über die noch zu erwartende Lebensdauer von Einrichtungen und Geräten an diesen Stellen. In besonderem Maße gilt dies für Ver- oder Entsorgungseinrichtungen, etwa für elektrische Kabel, bei deren Beschädigung oder gar Ausfall mit erhöhten Nachfolgeschäden gerechnet werden muß.

Der Erfindung liegt daher die Aufgabe zugrunde, aufbauend auf den bisherigen Erkenntnissen in der Messung von Strahlendosen, eine Möglichkeit zu schaffen, den aktuellen Stand der Strahlendosis an beliebigen Stellen eines Raumes oder eines Produktes zu ermitteln.

Gelöst wird diese Aufgabe gemäß der beanspruchten Erfindung durch einen selbsttragenden oder in langgestrecktes Gut, wie elektrische Kabel, Rohre und dergleichen, integrierbaren Formstrang aus extrudierten Werkstoffen, die Substanzen enthalten, welche unter dem Einfluß der energiereichen Strahlung eine optische Veränderung und/oder eine Änderung ihrer Molekularstruktur erfahren, wobei der Formstrang sich in Längsrichtung erstreckende Fäden oder Stränge erhöhter Zugfestigkeit aufweist. Solche Formkörper sind in beliebigen Längen herstellbar, sie gestatten aber auch eine einfache Verlegung in Bereichen, in denen das Auftreten energiereicher Strahlung bekannt ist oder vermutet wird. Sie können z. b. in den für elektrische Kabel oder Ver- oder Entsorgungsleitungen vorgesehenen Führungsschächten mit verlegt und in bestimmten Zeitabschnitten können aus diesen Formsträngen Abschnitte herausgetrennt, und an diesen Abschnitten können die bis zu dieser Zeit aufgenommenen Strahlendosen ermittelt werden. Auf die Einhaltung bestimmter Zeitabschnitte kann aber auch verzichtet werden, wenn, wie in der Erfindung auch vorgesehen, der Werkstoff des Formstranges Substanzen enthält, die unter Strahleneinwirkung zu einer optischen Veränderung führen. Dann läßt sich anhand der optischen Veränderung feststellen, ob überhaupt eine Bestrahlung der erfindungsgemäßen Anordnung stattgefunden hat, und wenn ja, kann wie beschrieben, aus dem Formstrang ein Abschnitt oder mehrere herausgetrennt und zur quantitativen Feststellung der aufgenommenen Strahlendosis überprüft werden.

Die Erfindung erlaubt in einfacher Weise aber auch die Kontrolle bzw. Überwachung von mit energiereichen Strahlen arbeitenden Anlagen und Einrichtungen, beispielsweise von sogenannten Strahlenvernetzungsanlagen für elektrische Kabel und Leitungen. Hierzu kann man so vorgehen, daß die gemäß der Erfindung ausgebildeten Formstränge zusammen mit dem zu vernetzenden Kabel durch die Anlage geführt und anschließend die vom Formstrang aufgenommene Strahlendosis ermittelt wird. So sind auf einfachem Wege Rückschlüsse auf das einwandfreie Arbeiten der Anlage ebenso möglich, wie eine Optimierung der zur Vernetzung erforderlichen Strahlendosis bei unterschiedlichen äußeren Abmessungen und/oder Werkstoffen.

Ein anderes Beispiel sind Bestrahlungsanlagen, z.B. sogenannte Co-Quellen als $\gamma$-Strahler zur Sterilisierung großflächiger Teile oder ausgelegter Materialien.

Als Substanzen, die unter dem Einfluß energiereicher Strahlen eine Änderung ihrer Molekularstruktur erfahren, können beliebige verwendet werden, wenn sie sich nur zusammen mit den Werkstoffen für den Formstrang extrudieren lassen. Von den bisher bekannten Substanzen scheint jedoch Alanin ein besonders geeignetes Material zu sein, so daß diesem bei Durchführung der Erfindung der Vorzug gegeben wird.

Für die Darstellung optischer Veränderungen an dem erfindungsgemäßen Formstrang wird man vorteilhaft strahlensensitive Farbstoffe verwenden, die in das Material des Formstranges eingemischt, mit diesem zusammen extrudiert werden. Als besonders geeignete Farbstoffe haben sich z.B. Triphenyl-methyl-cyanide erwiesen.

Um die Effektivität des nach der Erfindung ausgebildeten Formstranges weiter zu erhöhen, ist es erforderlich, als Basismaterial für den extrudierten Werkstoff eine mit Alanin hochgefüllte Mischung zu verwenden. So kann als Basismaterial für den extrudierten Werkstoff ein thermoplastischer Kautschuk (TPR) oder auch ein Ethylen-Prophylen-Kautschuk verwendet werden, dem, bezogen auf 100 Teile Polymeres, 30 - 800 Teile Alanin zugegeben werden. Mit 30 - 800 Teilen, vorzugsweise 100 - 200 Teilen Alanin können aber auch ein Polyolefin oder ein Olefinmischpolymerisat, Verschnitte mit elastifizierenden Komponenten, ggf. mit geringen Mengen geeigneter Weichmacher, Stabilisatoren usw. verwendet werden.

Für den Fall, daß die optische Veränderung des erfindungsgemäßen Formstranges allein oder in Kombination mit einer Änderung der Molekularstruktur als Hinweis auf eine erfolgte energiereiche Strahlung herangezogen werden soll, wird man als Basismaterial für den extrudierten Werkstoff ein Polymer allein oder ein Polymerblend verwenden, das aufgrund seiner gezielt eingestellten Polarität die Empfindlichkeit des durch die Strahlung ausgelösten Farbumschlages des Farbstoffes, der in Mengen von bis zu 10% in der Gesamtmischung enthalten sein kann, weiter verbessert.

Der Formstrang nach der Erfindung, der entweder allein oder in Verbindung mit anderem langgestrecktem Gut verwendet werden kann, kann z.B. als Vollprofil ausgebildet sein. Dabei spielt die Form des Querschnittes keine Rolle, der Querschnitt kann rund, quadratisch, mehreckig oder beliebig ausgebildet sein, entscheidend ist, daß der Formstrang durch Extrusion hergestellt werden kann. Der Formstrang kann auch als Rohr ausgebildet sein. Entscheidend für die Querschnittsform oder die Art des Profiles wird der jeweilige Anwendungszweck sein.

Besonders vorteilhaft ist es auch, den Formstrang, sei es als Voll- oder Hohlprofil, mehrschichtig oder mehrlagig aufzubauen. Dabei können die einzelnen Schichten oder Lagen konzentrisch zueinander angeordnet sein, dies wird dort der Fall sein, wo es sich um kreisförmige Querschnitte des Formstranges handelt. Liegt der Formstrang aber beispielsweise in Form eines Bandes vor, dann wird man, falls erforderlich, die einzelnen Schichten übereinander anordnen. Der Vorteil der Mehrschichtigkeit oder Mehrlagigkeit des Formkörpers ist vor allem darin zu sehen, daß in einer einzigen Anordnung zur Erfassung der integralen örtlichen Dosis umgebender energiereicher Strahlung sowohl die optische Veränderung als auch die Änderung der Molekularstruktur berücksichtigt werden kann. Zu diesem Zweck kann man beispielsweise so vorgehen, daß von den Schichten des Formkörpers mindestens jeweils eine Alanin und eine zweite strahlensensitive Farbstoffe enthält.

Um den bereits erfolgten Einfluß energiereicher Strahlung sichtbar zu machen, wird bei mehrschichtigem Aufbau die äußere Schicht die strahlensensitiven Farbstoffe enthalten. In diesem Fall hat es sich als zweckmäßig erwiesen, über dieser Schicht eine zusätzliche transparente Deckschicht anzuordnen, die ggf. zusätzlich einen UV-Absorber enthält. Auf diese Weise lassen sich nachteilige Auswirkungen auf die Farbstoffe enthaltende Schicht vermeiden.

Aber nicht nur ganze Schichten oder Lagen eines erfindungsgemäßen Formstranges können die von einer energiereichen Strahlung beeinflußbaren Substanzen enthalten, man kann in Weiterführung der Erfindung auch so vorgehen, daß der Alanin und/oder strahlensensitive Farbstoff enthaltende Werkstoff in Form von extrudierten Streifen am oder im Formstrang angeordnet ist. Diese Streifen können längs des Formstranges oder wendelförmig zu diesem verlaufen, sie können auch als in sich geschlossene Ringe ausgebildet sein, die längs des Formstranges in Achsrichtung nebeneinander und in Abstand zueinander angeordnet sind.

Um den Formstrang selbsttragend auszubilden, hat es sich in Durchführung der Erfindung als besonders vorteilhaft erwiesen, wenn der Formstrang eine dünnwandige geschlossenen Hülle aus einem mechanisch besonders festen Polymermaterial erhält. Ein weiterer Vorteil besteht darin, daß diese Hülle, etwa durch Extrusion aufgebracht, eine glatte Oberfläche aufweist, die insbesondere auch beim Verlegen solcher Formstränge in engen Schächten oder auf Kabelpritschen von Nutzen ist. In diesem Zusammenhang kann es weiterhin oft zweckmäßig sein, wenn die dünnwandige Hülle aus einem extrudierbaren Werkstoff erhöhter Abriebfestigkeit besteht, etwa auf Basis Hartpolyethylen, Polypropylen, Polyurethan und dergleichen allein oder in Mischung.

Um bei der Verlegung der erfindungsgemäßen Formstränge eine besonders hohe Zugfestigkeit dieser Elemente zu erreichen, können die längsverlaufenden Fäden oder Strängen erhöhter Zugfestigkeit beispielsweise Kunststoffäden auf der Basis Polyamide oder -aramide sein, wie sie z.B. unter dem Handelsnamen "Kevlar" bekannt sind.

Es ist besonders vorteilhaft, wenn der Formstrang am das langgestreckte Gut nach außen abschließenden Mantel als längsverlaufende Noppe oder längsverlaufender Steg angeordnet ist. Diese Noppen oder Stege können in einfachster Weise durch gleichzeitige Extrusion mit dem Mantelmaterial gebildet werden. Auch ein nachträgliches Anspritzen kann für die notwendige Noppen- oder Stegbildung herangezogen werden.

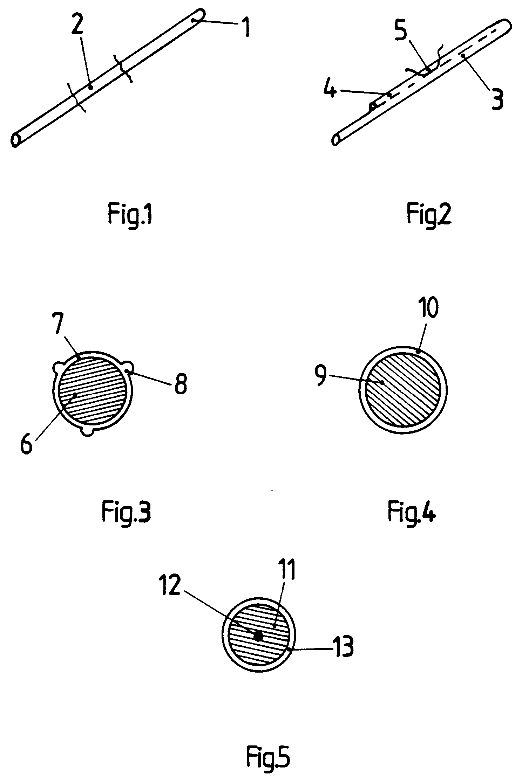

Die Erfindung sei anhand nachstehender Mischungsbeispiele sowie der in den Fig. 1-10 dargestellten Ausführungsformen der Erfindung näher erläutert.

Beispiel I

| Thermoplastischer Kautschuk | 100 Teile |
|---|---|
| Alanin | 100 Teile |

Beispiel II

| Polyethylen-Copolymer | 100 Teile |
|---|---|
| (Dichte 0,92, Vinylacetatgehalt 8%) | |
| Alanin | 100 Teile |

Beispiel III

| Copolymerisat aus Alpha-Olefinen (VLDPE) | 100 Teile |
|---|---|
| (Dichte 0,895) | |
| Alanin | 200 Teile |

Beispiel IV

| Ethylen-Prophylen-Kautschuk | 100 Teile |
|---|---|
| Weichmacher | 30 Teile |
| Stabilisator | 4 Teile |
| Alanin | 200 Teile |

Beispiel V

| Polyethylen-Copolymer | 100 Teile |
|---|---|
| Triphenyl-methyl-cyanid | 0,1 - 0,6 Teile |

Mögliche Ausführungsformen der Erfindung veranschaulichen die Figuren. So zeigt Fig. 1 einen z.B. aus der Mischung II extrudierten Formstrang 1, der gemeinsam mit dem zu überwachenden elektrischen Kabel oder in der Nähe des zu überwachenden Objektes verlegt, oder in der Nähe des dem Einfluß energiereicher Strahlung ausgesetzten Gerätes angeordnet wird. Der Kunststoffstrang 1 kann neben dem zu überwachenden Gut angeordnet sein, im Falle eines elektrischen Kabels oder einer anderen Versorgungsleitung beispielsweise, kann der Formstrang das Kabel oder die betreffende Leitung aber auch wendelförmig umgeben. In festlegbaren Zeitintervallen wird ein Teilstück 2 aus dem Kunststoffstrang 1 herausgetrennt und die zwischenzeitlich aufgenommene Strahlendosis auf bekanntem Wege ermittelt.

Das in der Fig. 2 dargestellte strangförmige Gut weist an seinem Umfang eine sich in Längsrichtung erstreckende Noppe 4 auf. Diese Noppe 4, auf beliebige Weise, etwa durch in Abständen vorgesehene Klebverbindungen am Umfang des Gutes 3 befestigt, kann ein Formstrang entsprechend dem Mischungsbeispiel I sein. Das strangförmige Gut 3 kann ein elektrisches Kabel sein, geeignet für die Energie- oder Nachrichtenübertragung, aber auch eine Versorgungs- bzw. Entsorgungsrohrleitung. Auch von der Noppe 4 werden in festlegbaren Zeitabschnitten Proben 5 zur Messung der aufgenommen Strahlendosis entnommen.

Eine fertigungstechnisch besonders günstige Festlegung von Noppen oder Stegen am Umfang des zu überwachenden Gutes zeigt die Fig.3. Die Seele 6 z.B. eines Energieübertragungskabels ist von dem Kunststoffmantel 7 umgeben. Bei der Extrusion des Mantels werden gleichzeitig die längsverlaufenden Stege 8 angeformt. Diese etwa aus einer Mischung nach Beispiel III hergestellten, Alanine enthaltenden Formstränge, dienen als Dosimeter für die energiereichen Strahlen. Die Messung bzw. die in Zeitintervallen erfolgende Kontrolle wird wie oben beschrieben durchgeführt.

Die Fig. 4 zeigt eine Möglichkeit, die mechanische Stabilität aus einer mit Alanin hochgefüllten Mischung hergestellten Formstränge zu erhöhen. Hierzu dient eine, den eigentlichen Formstrang 9 umgebende dünnwandige Hülle 10. Diese Hülle, etwa aus einem abriebfestem Kunststoff, ist nur als äußere Haut zu betrachten, sie wird daher in der Regel weniger als 30% betragen, bezogen auf den Durchmesser des gesamten Stranges.

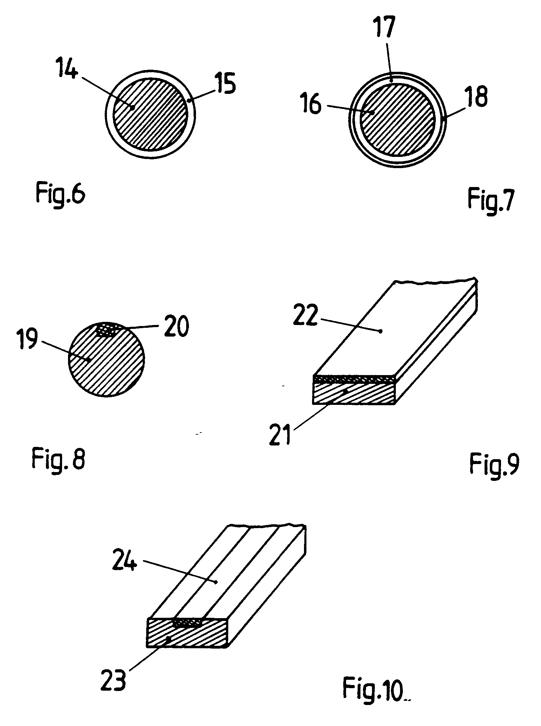

In der Fig. 5 ist eine Ausführungsform dargestellt, bei der zur optimalen Kraftübertragung beim Einziehen in enge Kanäle oder ähnliches in den Formstrang 11 ein Faden 12 eingelegt ist. Dieser Faden 12 ist geeignet, die wesentlichen Kräfte bei Zugbeanspruchung aufzunehmen. Zusätzlich kann eine abriebfeste Hülle 13 wie bei den vorherigen Ausführungsbeispielen vorgesehen sein.

Bei den bisherigen Ausführungsbeispielen war darauf hingewiesen, daß nach bestimmten Zeitintervallen Abschnitte aus dem erfindungsgemäßen Formstrang herausgetrennt und der Überprüfung unterzogen werden. Diese Festlegung bestimmter Zeitintervalle und Überprüfung möglicherweise noch nicht meßbar durch Strahlung beeinflußter Substanzen läßt sich vermeiden, wenn man, wie nach der Erfindung auch vorgesehen, zusätzlich Substanzen verwendet, die unter dem Einfluß einer energiereichen Bestrahlung bereits optisch eine Reaktion anzeigen. Solche Ausführungsformen der Erfindung zeigen die Fig. 6 - 10.

In der Fig. 6 ist ein Formstrang mit rundem Querschnitt dargestellt, der aus einem Alanin enthaltenden extrudierten Kern 14 und einer darüber extrudierten Schicht 15 besteht, die zur optischen Anzeige einer aufgetretenen Strahlendosis einen strahlensensitiven Farbstoff enthält, beispielsweise ein Triphenyl-methyl-cyanid, wie es im Mischungsbeispiel V angegeben ist. Die zunächst z.B. farblose Farbschicht 15 erfährt unter dem Einfluß energiereicher Strahlung eine Einfärbung, wobei die Intensität der Einfärbung bereits ein ungefähres Maß für die aufgenommene Strahlendosis sein kann. Erst wenn durch die Farbveränderung der Schicht 15 überhaupt energiereiche Strahlen nachgewiesen sind, wird man, um die tatsächliche quantitative Strahlendosis zu ermitteln, von dem Formstrang wie beschrieben, Teilabschnitte heraustrennen und einer Messung unterziehen.

Abweichend von dem Ausführungsbeispiel nach der Fig. 6 zeigt die Fig. 7 eine Ausführungsform, bei der über dem Alanin oder eine andere geeignete Substanz enthaltenden extrudierten Kern 16 die Schicht 17 konzentrisch zum Kern angeordnet ist, die strahlensensitive Farbstoffe, z.B. in einer Größenordnung von 0,5 - 2 Teilen auf 100 Teilen Polymeres enthält. Darüber ist als äußere Deckschicht die weitgehend transparente, konzentrische Schicht 18 vorgesehen, die einmal als mechanischer Schutz für die darunter befindliche Schicht 17 dient, gleichzeitig aber auch dazu verwendet werden kann, die Farbschicht 17 vor dem Einfluß ultravioletter Strahlen zu schützen, indem sie einen UV-Absorber enthält.

Die eine Strahlendosis anzeigende, strahlensensitive Farbstoffe enthaltende Schicht muß aber nicht als konzentrische Schicht bei einem kreisrunden Querschnitt angeordnet sein. Man kann, wie die Fig. 8 zeigt, auch so vorgehen, daß in dem Formstrang 19, dessen extrudierter Werkstoff z.B. Alanin oder ähnliches enthält, mit der Formgebung gleichzeitig ein längsverlaufender Streifen 20 eingeformt wird, der die strahlensensitiven Farbstoffe enthält. Der weitere Aufbau kann dann beispielsweise entsprechend Fig. 7 erfolgen.

Ausgeführt wurde bereits, daß die Querschnittsform des erfindungsgemäßen Formstranges unerheblich ist. Neben den z.B. beschriebenen kreisförmigen Querschnittsformen des Formstranges kann dieser auch eine Bandform aufweisen. Ein solches Ausführungsbeispiel zeigt die Fig. 9. Die Schichten oder Lagen 21 bzw. 22 sind hier übereinander gelagert, wobei die Schicht 21 gleichsam als Träger Alanin enthält und etwa aus dem Werkstoff entsprechend Beispiel II hergestellt ist, während die Schicht oder Lage 22, hergestellt nach dem Mischungsbeispiel V, die Farbkomponente enthält. Selbstverständlich können auch bei dieser Ausführungsform der Erfindung weitere Schichten vorgesehen sein, die entweder zur mechanischen Stabilisierung des Formstranges dienen, die Verlegung dieses Formstranges erleichtern oder auch dazu dienen, die strahlensensitive Schicht 22 vor mechanischer Beanspruchung zu schützen. Ebenso können, wie anhand des Ausführungsbeispieles der Fig. 5 erläutert, auch im Querschnitt rechteckförmige Profilstränge mit Zugelementen und dergleichen versehen sein.

Die Fig. 10 schließlich zeigt eine Ausführungsform, bei der auch im Falle eines Formstranges 23 mit rechteckförmigem Querschnitt bei der Herstellung ein längsverlaufender Streifen 24 eingeformt wird. Je nach Dimensionierung der Teilstränge 23 und 24 wird man entweder den längsverlaufenden Streifen oder den übrigen Teil des Formstranges mit den strahlensensitiven Farbstoffen oder mit Alanin oder ähnlichem versetzen, um deren Eigenschaften für die Messung energiereicher Strahlen nutzbar zu machen.

**Patentansprüche**

1. Anordnung zur Erfassung der integralen örtlichen Dosis umgebender energiereicher Strahlung aus einem extrudierten selbsttragenden oder in der durch die Extrusion langgestreckten Form in entsprechendes langgestrecktes Gut, wie elektrische Kabel, Rohre und dergl., integrierbaren Formstrang, der Substanzen enthält, welche unter dem Einfluß der energiereichen Strahlung eine Änderung ihrer Molekularstruktur erfahren, dadurch gekennzeichnet, daß der Formstrang zur Erhöhung der Zugfestigkeit sich in Längsrichtung erstreckende Fäden oder Stränge erhöhter Zugfestigkeit aufweist.

2. Anordnung nach Anspruch 1, dadurch gekennzeichnet, daß der extrudierte, Fäden oder Stränge erhöhter Zugfestigkeit aufweisende langgestreckte Formstrang anstelle der eine Änderung ihrer Molekularstruktur erfahrenen oder zusätzlich hierzu Substanzen enthält, die unter dem Einfluß der enegiereichen Strahlung eine optische Veränderung erfahren.

3. Anordnung nach Anspruch 1, dadurch gekennzeichnet, daß der zum Formstrang extrudierte Werkstoff strahlensensitive Farbstoffe enthält.

4. Anordnung nach Anspruch 3, dadurch gekennzeichnet, daß die strahlensensitiven Farbstoffe Triphenyl-methyl-cyanide sind.

5. Anordnung nach Anspruch 1, dadurch gekennzeichnet, daß als Basismaterial für den extrudierten Werkstoff thermoplastischer Kautschuk (TPR) dient, dem, bezogen auf 100 Teile Polymeres, 30 - 800 Teile Alanin zugegeben sind.

6. Anordnung nach Anspruch 1, dadurch gekennzeichnet, daß als Basismaterial für den extrudierten Werkstoff ein Polyolefin oder ein Olefinmischpolymerisat dient, dem, bezogen auf 100 Teile Polymeres, 30 - 800 Teile Alanin zugegeben sind.

7. Anordnung nach Anspruch 1, dadurch gekennzeichnet, daß als Basismaterial für den extrudierten Werkstoff Ethylen-Prophylen-Kautschuk verwendet wird, dem, bezogen auf 100 Teile Polymeres, 30 - 800 Teile Alanin zugegeben sind.

8. Anordnung nach Anspruch 5 oder einem der folgenden, dadurch gekennzeichnet, daß dem Basismaterial Weichmacher, Gleitmittel und Stabilisatoren zugegeben sind, die die Extrudierbarkeit verbessern und im Material eine thermische
Langzeitstabilisierung bewirken und/oder auch gegen die Verschlechterung der mechanischen Eigenschaften durch die energiereiche Strahlung selbst wirksam sind, und daß dem Material, bezogen auf 100 Teile dieser Mischung 30 - 800 Teile Alanin zugegeben sind.

9. Anordnung nach Anspruch 1, dadurch gekennzeichnet, daß als Basismaterial für den extrudierten Werkstoff ein thermoplastischer Kautschuk (TPR) dient, dem, bezogen auf 100 Teile Polymeres, 0,1 - 10 Teile Triphenyl-methyl-cyanide zugegeben sind.

10. Anordnung nach Anspruch 1, dadurch gekennzeichnet, daß als Basismaterial für den extrudierten Werkstoff eine Polyolefin oder ein Olefinmischpolymerisat dient, dem, bezogen auf 100 Teile Polymeres, 0,1 - 10 Teile Triphenyl-methyl-cyanide zugegeben sind.

11. Anordnung nach Anspruch 1, dadurch gekennzeichnet, daß als Basismaterial für den extrudierten Werkstoff ein Gemisch verschiedener Polymere verwendet wird, das aufgrund seiner so eingestellten, definierten Polarität die Ausbeute der durch die energiereiche Strahlung ausgelösten Farbänderungen des strahlensensitiven Farbstoffes, der, bezogen auf 100 Teile Polymerblend, zu 0,1 - 10 Teilen zugegeben ist, erhöht.

12. Anordnung nach Anspruch 1 oder einem der folgenden, dadurch gekennzeichnet, daß der Formstrang aus einem Vollprofil besteht.

13. Anordnung nach Anspruch 1 oder einem der folgenden, dadurch gekennzeichnet, daß der Formstrang ein Hohlprofil ist.

14. Anordnung nach Anspruch 9 oder 10, dadurch gekennzeichnet, daß das Profil mehrschichtig oder mehrlagig aufgebaut ist.

15. Anordnung nach Anspruch 14, dadurch gekennzeichnet, daß die einzelnen Schichten oder Lagen konzentrisch zueinander angeordnet sind.

16. Anordnung nach Anspruch 15, <u>dadurch gekennzeichnet</u>, daß von den Schichten des Formkörpers mindestens jeweils eine Alanin und eine zweite strahlensensitive Farbstoffe enthält.

17. Anordnung nach Anspruch 16, bei dem die äußere Schicht strahlensensitive Farbstoffe enthält, <u>dadurch gekennzeichnet</u>, daß über dieser Schicht eine zusätzliche transparente Deckschicht angeordnet ist.

18. Anordnung nach Anspruch 17, <u>dadurch gekennzeichnet</u>, daß die zusätzliche Deckschicht einen UV-Absorber enthält.

19. Anordnung nach Anspruch 1 oder einem der folgenden mit ein- oder mehrschichtigem oder -lagigem Aufbau des Formstranges, <u>dadurch gekennzeichnet</u>, daß der Alanin und/oder strahlensensitive Farbstoffe enthaltende Werkstoff in Form von extrudierten Streifen am oder im Formstrang angeordnet ist.

20. Anordnung nach Anspruch 19, <u>dadurch gekennzeichnet</u>, daß die Streifen am oder im Formstrang längs oder wendelförmig verlaufen.

21. Anordnung nach Anspruch 19, <u>dadurch gekennzeichnet</u>, daß die Streifen am oder im Formstrang in Achsrichtung Abstand haltende, in sich geschlossene Ringe sind.

22. Anordnung nach Anspruch 1 oder einem der folgenden, <u>gekennzeichnet durch</u> eine geschlossene Hülle aus einem Polymermaterial.

23. Anordnung nach Anspruch 1 oder einem der folgenden mit einem Langgestreckten Gut, das einen nach außen abschließenden Mantel aufweist, <u>dadurch gekennzeichnet</u>, daß der Formstrang an dem langgestrecktem Gut am Mantel als längsverlaufende Noppe oder als Steg angeordnet ist.

24. Anordnung nach Anspruch 21, <u>dadurch gekennzeichnet</u>, daß dieser eine Noppe oder einen Steg bildende Formstrang durch gleichzeitige Extrusion mit dem Mantelmaterial gebildet ist.

25. Anordnung nach Anspruch 14, <u>dadurch gekennzeichnet</u>, daß die äußerste Schicht des Formstranges aus einem extrudierten Werkstoff erhöhter Abriebfestigkeit besteht.

## Claims

1. Arrangement for recording the integral local dose of ambient high-energy radiation from an extruded profile strand which is self-supporting or, in the elongated form produced by extrusion, can be integrated into a corresponding elongated article, such as electrical cables, pipes and the like, and which contains substances which undergo a change in their molecular structure under the effect of high-energy radiation, characterised in that the profile strand has, in order to increase the tensile strength, filaments or strands of increased tensile strength extending in the longitudinal direction.

2. Arrangement according to Claim 1, characterised in that the extruded, elongated profile strand having filaments or strands of increased tensile strength contains, instead of, or in addition to, substances undergoing a change in their molecular structure, substances which undergo an optical change under the effect of high-energy radiation.

3. Arrangement according to Claim 1, characterised in that the matter extruded to form the profile strand contains radiation-sensitive colorants.

4. Arrangement according to Claim 3, characterised in that the radiation-sensitive colorants are triphenylmethyl cyanides.

5. Arrangement according to Claim 1, characterised in that the basic material for the extruded matter is thermoplastic rubber (TPR) to which 30 - 800 parts of alanine, based on 100 parts of polymer, are added.

6. Arrangement according to Claim 1, characterised in that the basic material for the extruded matter is a polyolefin or an olefin copolymer to which 30 - 800 parts of alanine, based on 100 parts of polymer, are added.

7. Arrangement according to Claim 1, characterised in that the basic material for the extruded matter is an ethylene/propylene rubber to which 30 - 800 parts of alanine, based on 100 parts of polymer, are added.

8. Arrangement according to Claim 5 or one of the following claims, characterised in that the basic material has added to it plasticisers, lubricants and stabilisers, which improve the extrudability and effect a long-term thermal stabilisation in the material and/or are active against the deterioration of the mechanical properties caused by the high-energy radiation itself, and in that 30 - 800 parts of alanine, based on 100 parts of this composition, are added to the material.

9. Arrangement according to Claim 1, characterised in that the basic material for the extruded matter is a thermoplastic rubber (TPR) to which 0.1 - 10 parts of triphenylmethyl cyanides, based on 100 parts of polymer, are added.

10. Arrangement according to Claim 1, characterised in that the basic material for the extruded matter is a polyolefin or an olefin copolymer to which 0.1 - 10 parts of triphenylmethyl cyanides, based on 100 parts of polymer, are added.

11. Arrangement according to Claim 1, characterised in that the basic material for the extruded matter is a blend of different polymers, which, because of its defined polarity adjusted in this manner, increases the extent of the colour changes of the radiation-sensitive colorant, which are initiated by the high-energy radiation, of which colorant 0.1 - 10 parts, based on 100 parts of polymer blend, are added .

12. Arrangement according to Claim 1 or one of the following claims, characterised in that the profile strand consists of a solid profile.

13. Arrangement according to Claim 1 or one of the following claims, characterised in that the profile strand is a hollow profile.

14. Arrangement according to Claim 9 or 10, characterised in that the profile is of multi-ply or multi-layer structure.

15. Arrangement according to Claim 14, characterised in that the individual plies or layers are arranged concentrically to one another.

16. Arrangement according to Claim 15, characterised in that of the plies of the profile body at least one contains alanine and a second contains radiation-sensitive colorants.

17. Arrangement according to Claim 16, in which the outer ply contains radiation-sensitive colorants, characterised in that an additional transparent cover ply is disposed over this ply.

18. Arrangement according to Claim 17, characterised in that the additional cover ply contains a UV-absorber.

19. Arrangement according to Claim 1 or one of the following claims, with a single- or multi-ply or single- or multi-layer structure of the profile strand, characterised in that the matter containing alanine and/or radiation-sensitive colorants is arranged in the form of extruded strips on or in the profile strand.

20. Arrangement according to Claim 19, characterised in that the strips extend longitudinally or helically on or in the profile strand.

21. Arrangement according to Claim 19, characterised in that the strips on or in the profile strand are self-contained rings keeping a distance in the axial direction.

22. Arrangement according to Claim 1 or one of the following claims, characterised by a closed sleeve of a polymer material.

23. Arrangement according to Claim 1 or one of the following claims, with an elongated article having an outwardly enclosing sheath, characterised in that the profile strand on the elongated article is arranged as a longitudinally extending nub or as a web on the sheath.

**24.** Arrangement according to Claim 21, characterised in that this profile strand forming a nub or a web is formed by simultaneous extrusion with the sheath material.

**25.** Arrangement according to Claim 14, characterised in that the outermost ply of the profile strand consists of an extruded matter of increased abrasion resistance.

**Revendications**

**1.** Agencement pour la détermination de la dose locale intégrale d'un rayonnement ambiant à haute énergie à partir d'un profilé continu extrudé, de forme auto-portante ou bien étirée en longueur par extrusion susceptible d'être intégré dans un produit correspondant étiré en longueur, tel que des câbles électriques, des tubes et similaires, et qui contient des substances qui subissent un changement de structure moléculaire sous l'influence du rayonnement à haute énergie, caractérisé en ce que le profilé continu, afin d'augmenter sa résistance à la traction, comporte dans la direction longitudinale des fils ou des cordons dont la résistance à la traction est élevée.

**2.** Agencement selon la revendication 1, caractérisé en ce que le profilé extrudé étiré en longueur et comportant des fils ou des cordons dont la résistance à la traction est élevée, contient des substances qui, au lieu de subir un changement de structure moléculaire, ou à la place de ce changement, subissent un changement optique sous l'influence d'un rayonnement à haute énergie.

**3.** Agencement selon la revendication 1, caractérisé en ce que la matière première extrudé pour réaliser le profilé continu contient des substances colorantes sensibles au rayonnement.

**4.** Agencement selon la revendication 3, caractérisé en ce que les substances colorantes sensibles au rayonnement sont des cyanures de triphénylméthyle.

**5.** Agencement selon la revendication 1, caractérisé en ce que le matériau de base pour la matière première extrudée est un caoutchouc thermoplastique (TPR) additionné, pour 100 parties de polymères, de 30 à 800 parties d'alanine.

**6.** Agencement selon la revendication 1, caractérisé en ce que le matériau de base pour la matière première extrudé est une polyoléfine ou un polymérisat oléfinique mélangé qui, pour 100 parties de polymères, contient de 30 à 800 parties d'alanine.

**7.** Agencement selon la revendication 1, caractérisé en ce que le matériau de base pour la matière première extrudée est un élastomère éthylène-propylène qui, pour 100 parties de polymères, contient de 30 à 800 parties d'alanine.

**8.** Agencement selon la revendication 5, ou l'une des suivantes, caractérisé en ce que sont ajoutés au matériau de base des plastifiants, des agents anti-friction et des stabilisateurs qui améliorent sa capacité à être extrudé et qui effectuent, dans le matériau, une stabilisation thermique à long terme et/ou sont eux-mêmes efficaces contre la dégradation des propriétés mécaniques provoquée par le rayonnement à haute énergie, et en ce que sont ajoutés au matériau, pour 100 parties de ce mélange, de 30 à 800 parties d'alanine.

**9.** Agencement selon la revendication 1, caractérisé en ce que le matériau de base pour la matière première extrudée, est un élastomère thermoplastique (TPR) auquel sont ajoutées de 0,1 à 10 parties de cyanure de triphénylméthyle pour 100 parties de polymères.

**10.** Agencement selon la revendication 1, caractérisé en ce que le matériau de base pour la matière première extrudée, est une polyoléfine ou un polymérisat oléfinique mélangé auquel sont ajoutées, pour 100 parties de polymères, de 0,1 à 10 parties de cyanure de triphénylméthyle.

**11.** Agencement selon la revendication 1, caractérisé en ce qu'on utilise comme matériau de base pour la matière première extrudée, un mélange de différents polymères qui est susceptible d'augmenter, du fait de sa polarité définie et déterminée, le rendement des changements de couleur de la matière colorante sensible au rayonnement provoqués par le rayonnement à haute énergie, matière colorante dont on ajoute de 0,1 à 10 parties, pour 100 parties du mélange de polymères.

12. Agencement selon la revendication 1, ou l'une des suivantes, caractérisé en ce que le profilé continu se compose d'un profilé plein.

13. Agencement selon la revendication 1, ou l'une des revendications suivantes, caractérisé en ce que le profilé continu est un profil creux.

14. Agencement selon la revendication 9 ou 10, caractérisé en ce que le profilé présente une structure multicouche ou multistrate.

15. Agencement selon la revendication 14, caractérisé en ce que les couches ou strates individuelles sont disposées concentriquements les unes par rapport aux autres.

16. Agencement selon la revendication 15, caractérisé en ce que, parmi les couches du profilé continu, chacune contient au moins une alanine et une deuxième substance colorante sensible au rayonnement.

17. Agencement selon la revendication 16, dans lequel la couche externe contient des matières colorantes sensibles au rayonnement, caractérisé en ce qu'une couche supplémentaire de couverture transparente est disposée par dessus cette couche.

18. Agencement selon la revendication 17, caractérisé en ce que la couche de couverture supplémentaire contient une substance absorbant le rayonnement ultraviolet.

19. Agencement selon la revendication 1 ou l'une des revendications suivantes, et dont la structure du profilé continu est mono- ou multicouche ou -strate, caractérisé en ce que le matériau contenant de l'alanine et/ou des substances colorantes sensibles au rayonnement est disposée sous la forme de bandes extrudées sur ou dans le profilé continu.

20. Agencement selon la revendication 19, caractérisé en ce que les bandes sont disposées longitudinalement ou en forme de spirale sur ou dans le profilé continu.

21. Agencement selon la revendication 19, caractérisé en ce que les bandes sont des anneaux fermés sur eux-mêmes disposés sur ou dans le profilé continu à distance dans la direction axiale.

22. Agencement selon la revendication 1 ou l'une des revendications suivantes, caractérisé par une enveloppe fermée en un matériau polymère.

23. Agencement selon la revendication 1 ou l'une des revendications suivantes, avec un produit étiré en longueur et comportant une enveloppe qui l'entoure extérieurement, caractérisé en ce que le profilé continu est disposé sur le produit étiré en longueur sur son enveloppe sous la forme d'une partie en saillie (nope) allongée ou d'une nervure longitudinale.

24. Agencement selon la revendication 21, caractérisé en ce que ce profilé formant une nappe ou une barrette est formé par extrusion simultanée avec le matériau de l'enveloppe.

25. Agencement selon la revendication 14, caractérisé en ce que la couche la plus extérieure du profilé continu est composée d'un matériau extrudé à grande résistance à l'abrasion.

Fig.1

Fig2

Fig.3

Fig.4

Fig.5

Fig.6

Fig.7

Fig. 8

Fig.9

Fig.10